# EUROPÄISCHE PATENTSCHRIFT

(11) **EP 0 461 380 B1**
(45) Veröffentlichungstag und Bekanntmachung des Hinweises auf die Patenterteilung: **08.09.1999**
(21) Anmeldenummer: 91107082.9
(22) Anmeldetag: 02.05.1991
(51) Int. Cl.: H04B 10/14, H04B 10/12, H04B 7/26

(54) **Funk-Nachrichtenübertragungssystem, insbesondere zellulares Mobilfunksystem**
Data transmission radio system, particularly cellular radio system
Système de transmission de données radio, notamment système de radio mobile cellulaire

(30) Priorität: 15.06.1990 DE 4019224
(43) Veröffentlichungstag der Anmeldung: 18.12.1991
(73) Patentinhaber: ALCATEL, 75008 Paris (FR)
(72) Erfinder: Heidemann, Rolf, Dr., W-7146 Tamm (DE)
(74) Vertreter: Kugler, Hermann, Dipl.-Phys.

(56) Entgegenhaltungen:
- DE-A- 3 713 340
- DE-A- 3 907 851
- DE-A- 4 008 165
- TELCOM-REPORT, 12. Jahrgang, Heft 5/89, Siemens, Berlin und München "Intelligente Netze beschleunigen Einf hrung neuer Dienste" Seiten 142-145
- ELEKTRISCHES NACHRICHTENWESEN; Band 63, No. 1, 1989, Alcatel, Stuttgart M. BALLARD und D. VERHULZ "Digitales Funktelephonsystem ECR 900" Seiten 45-51

## Beschreibung

Die Erfindung betrifft ein Nachrichtenübertragungssystem nach dem Oberbegriff des Patentanspruchs 1 und eines nach dem Oberbegriff des Anspruchs 7. Ein solches System ist bekannt aus "Elektrisches Nachrichtenwesen", Band 63, Nr. 1/1989, Seiten 45 bis 51 oder aus "telecom-report" 12 (1989), Heft 5, Seiten 142 bis 145. Es handelt sich dabei um das europaweit als sogenanntes GSM-System standardisierte zellulare Mobilfunksystem.

Aus IEE REPRINT SERIES 4, Progress in optical communication, vol. 2.1982, London, UK, Seiten 228 bis 230,"Optical heterodyne detection of directly frequency modulated semiconductor laser signals", 09. September 1990; S. Sato et al. ist ein Experimentalsystem bekannt, bei dem ein Hochfrequenz-Signal, nämlich eine Sinusschwingung mit 300 MHz oder ein Impulsmuster wie folgt übertragen wird:
Ein Sende-Laser wird mit dem Hochfrequenz-Signal moduliert. Sein Ausgangssignal wird zusammen mit der unmodulierten Trägerschwingung eines Local-Oszillator-Lasers über eine optische Faser zu einer Photodiode übertragen. Aus deren elektrischem Ausgangssignal, Zwischenfrequenzsignal genannt, wird mit einem Mischer das Hochfrequenz-Signal wiedergewonnen.

Die Frequenzdifferenz der beiden Laser wird so eingestellt, daß sie gleich der Mittenfrequenz des Mischers ist.

Bei dem an erster Stelle genannten System ist die Quelle, die das Nachrichtensignal, das die Funkstation aussenden soll, liefert, die sogenannte "Mobilkommunikations-Vermittlungsstelle", und die räumlich davon entfernte Funkstation ist die sogenannte Feststation. Bei der Nachrichtensignal-Quelle, d.h. bei der "Mobilkommunikations-Vermittlungsstelle", befindet sich eine Übertragungseinrichtung, die über eine Leitung mit der Feststation verbunden ist und das von der Nachrichtensignal-Quelle stammende Nachrichtensignal zur Feststation überträgt. Die Feststation, genauer gesagt die Funkstation der Feststation, sendet ein Mikrowellen-Funksignal aus, das eine bestimmte Trägerfrequenz hat und das Nachrichtensignal enthält.

Bei den bekannten Systemen wird das Nachrichtensignal von der Nachrichtensignal-Quelle in der Basisbandlage, z.B. als PCM 30-Signal, zur Feststation übertragen. Die Feststation hat Trägerfrequenzeinrichtungen, die das auszusendende Nachrichtensignal aus der Basisbandlage in das Funksignal umsetzen, damit es über die Funkverbindung zu den mobilen Teilnehmern ausgesendet werden kann.

Für das Funksignal, das eine Feststation von den mobilen Teilnehmern empfängt, hat die Feststation bei den bekannten Systemen HF-Demodulationseinrichtungen, allgemein auch "HF-Trägerfrequenzeinrichtungen" genannt. Diese Einrichtungen gewinnen aus dem empfangenen Funksignal das darin enthaltene Nachrichtensignal, z.B. ein digitales Signal mit einer Bitfolgefrequenz von etwa 8 Mbit/s, das dann in der Basisbandlage zu der "Mobilkommunikations-Vermittlungsstelle" übertragen wird.

Ist der abzuwickelnde Funkverkehr so dicht, daß man die jeweils von einer Feststation versorgten Zellen zweckmäßigerweise sehr klein wählt, also zu sogenannten "Mikrozellen" übergeht, so sind sehr viele Zellen und damit sehr viele Feststationen erforderlich, um ein bestimmtes geographisches Gebiet zu versorgen. Legt man dazu das bekannte System zugrunde, so bedeutet dies einen hohen Kostenaufwand, da sehr viele Feststationen vorhanden sein müssen und jede von ihnen hauptsächlich wegen ihrer HF-Trägerfrequenzeinrichtungen teuer ist.

Aus der DE 37 13 340 A1 ist ein Verfahren zur optischen Nachrichtenübertragung zwischen räumlich voneinander getrenntem Sender und Empfänger bekannt, bei dem das Prinzip des Überlagerungsempfangs angewendet wird. Ein von einem empfangsseitig angeordneten Laser erzeugter unmodulierter optischer Träger wird über eine optische Faser zur Sendeseite übertragen und dort mit einem Nutzsignal in einem Modulator moduliert. Das so entstehende optische Signal, das das Nutzsignal enthält, läuft wieder zur Empfangsseite zurück und wird in einem dort befindlichen optischen Empfänger durch Mischung mit einer von demselben Laser abgeleiteten unmodulierten Trägerschwingung in ein Zwischenfrequenzband zur weiteren Verarbeitung umgesetzt. Eine Übertragung eines ein Nachrichtensignal enthaltenden Funksignals ist dort nicht erwähnt. Als Anwendungsfall, für den sich das Verfahren vorteilhaft anwenden läßt, ist eine Breitbandübertragung im Teilnehmeranschlußbereich genannt.

Es ist daher die Aufgabe der Erfindung, ein System der eingangs genannten Art anzugeben, bei dem das von einer Feststation auszusendende Funksignal so erzeugt und das von einer Feststation empfangene Funksignal so weiterverarbeitet wird, daß es bei einer Vielzahl von vorhandenen Zellen Kostenvorteile gegenüber dem bekannten System bietet und besonders für hochfrequente Funksignale im Bereich der Millimeter-Wellenlängen geeignet ist.

Die Aufgabe wird hinsichtlich des auszusendenden Funksignals wie im Patentanspruch 1 und hinsichtlich des empfangenen Funksignals wie im Patentanspruch 7 angegeben gelöst. Weiterbildungen sind den Unteransprüchen entnehmbar.

Die Erfindung bietet für zellulare Mobilfunksysteme, bei denen von einer zentralen Stelle aus verschiedene Nachrichtensignale zu verschiedenen Funkstationen und umgekehrt zu übertragen sind, den Vorteil, daß die Funkstationen höchst einfach sind und sämtliche klassischen übertragungseinrichtungen in der zentralen Stelle angeordnet und daher für eine Vielzahl von Funkstationen gemeinsam verwendbar sind.

Aber auch für andere Funk-Nachrichtenübertragungssysteme, bei denen von einer bestimmten Stelle aus nur ein einziges Nachrichtensignal zur Funkstation, z.B. einer Richtfunk-Station zu übertragen ist, und umgekehrt, hat die Erfindung den Vorteil, daß die Funkstation, z.B. die Richtfunkstation, eine höchst einfache und billige technische Einrichtung ist, und daß die teuereren übertragungseinrichtungen an einer Stelle untergebracht sind, die möglicherweise einfacher zugänglich als die Richtfunkstation und leichter gegen Zerstörung gesichert werden kann.

Abgesehen von der als bevorzugt dargestellten Anwendung bei zellularen Mobilfunksystemen läßt sich die Lösung nach dem Anspruch 1 (und die Weiterbildungen) in jeglichen Fällen anwenden, bei denen an einem ersten Ort ein Nachrichtensignal vorhanden ist und an einem zweiten Ort ein das Nachrichtensignal durch Modulation enthaltendes Signal, insbesondere ein Hochfrequenzsignal, erzeugt werden muß. Entsprechend läßt sich die Lösung nach dem Anspruch 7 (und die Weiterbildungen) in jeglichen Fällen anwenden, bei denen ein Signal, insbesondere ein hochfrequentes Signal, von einem ersten Ort zu einem zweiten Ort übertragen werden muß, ohne daß am ersten Ort teuere Einrichtungen notwendig sind.

Die Erfindung beruht auf der Grundidee, den für die Erzeugung des auszusendenden Funksignals und den für die Verarbeitung des empfangenen Funsignals erforderlichen Aufwand soweit wie möglich aus der Funkstation in die Vermittlungsstelle zu verlagern. Dieses ist bereits Gegenstand der älteren deutschen Patentanmeldung DE-A1 40 08 165.

Die vorliegende Erfindung verwendet sowohl bei der Lösung nach dem Anspruch 1 als auch bei der Lösung nach dem Anspruch 7 die an sich bekannte Technik des optischen Überlagerungsempfangs. Diese ist vielfach beschrieben, z.B. in "FREQUENZ" 41 (1987) 8, S. 201 bis 208.

Vergleicht man damit die Lösung nach dem Anspruch 1, so läßt sich sagen, daß es sich um ein System mit optischem Überlagerungsempfang handelt, mit der Besonderheit, daß das durch den überlagerungsempfang entstehende Zwischenfrequenz-Signal nicht das zu demodulierende Empfangssignal, sondern das auszusendende Funksignal ist, und daß der für den überlagerungsempfang typische "lokale Oszillator" nicht beim Empfänger, sondern beim Sender angeordnet ist. Vergleicht man die Lösung nach dem Anspruch 7 mit der bekannten Technik des optischen überlagerungsempfangs, so läßt sich sagen, daß es sich um ein System mit optischem überlagerungsempfang handelt, mit der Besonderheit, daß der "Sendeoszillator" und der "lokale Oszillator" durch einen einzigen Oszillator (optischer Sender) realisiert sind.

Die Erfindung wird nun anhand der Zeichnungen in Beispielen näher erläutert. Es zeigen:
- Fig. 1: eine schematische Darstellung eines erfindungsgemäßen Systems zum übertragen eines als Funksignal auszusendenden Nachrichtensignals,
- Fig. 2: eine detailliertere Darstellung der übertragungseinrichtung 10 aus Fig. 1,
- Fig. 3: eine schematische Darstellung eines erfindungsgemäßen Systems zum übertragen einer Vielzahl von als Funksignale auszusendenden Nachrichtensignalen,
- Fig. 4: eine schematische Darstellung eines Systems zum Übertragen eines empfangenen ein Nachrichtensignal enthaltenden Funksignals, und
- Fig. 5: eine Alternative zu dem in Fig. 4 enthaltenen optischen Modulator 43.

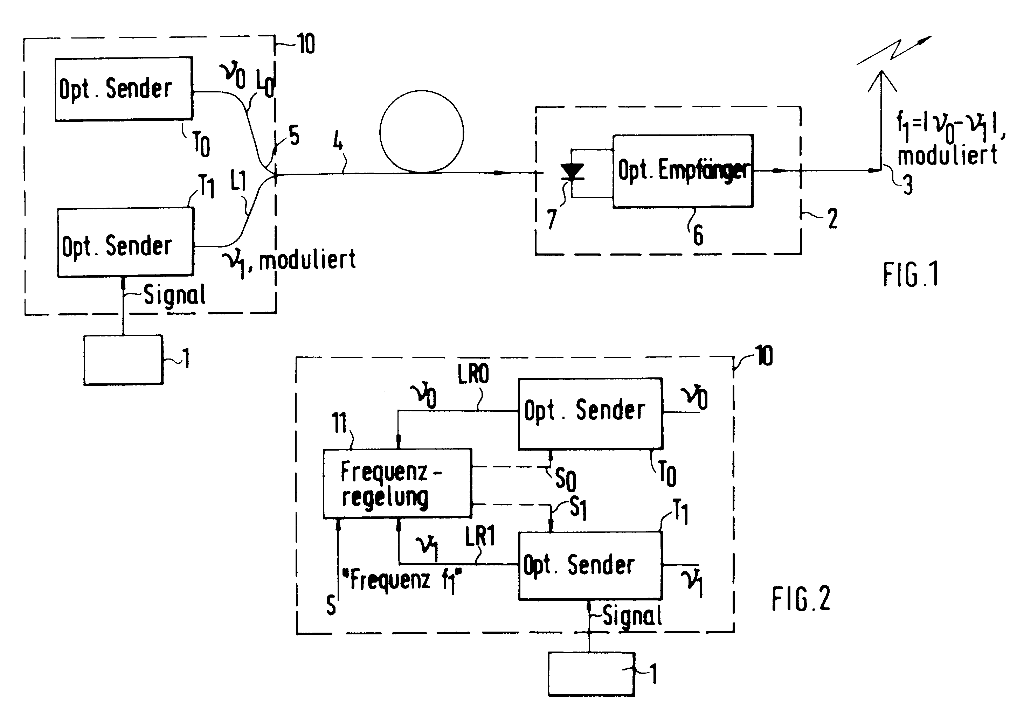

Das erfindungsgemäße System nach Fig. 1 läßt sich wie folgt beschreiben:

Wie bei dem eingangs genannten bekannten System befindet sich an einem ersten Ort eine Nachrichtensignal-Quelle 1, die ein zu übertragendes Nachrichtensignal, z.B. ein Digitalsignal mit einer Bitfolgefrequenz von etwa 8 Mbit/s, liefert. Dies kann z.B. die Vermittlungsstelle des eingangs genannten bekannten zellularen Mobilfunksystems sein. An einem zweiten Ort, der von dem Ort der Nachrichtensignal-Quelle 1 räumlich weit entfernt liegt, befindet sich eine Funkstation 2, die wie bei dem bekannten System die Aufgabe hat, ein Funksignal auszusenden, das das von der Quelle 1 stammende Nachrichtensignal enthält, indem es mit diesem moduliert ist.

Die Funkstation 2 kann eine der vielen Feststationen eines zellularen Mobilfunksystems sein, die die Aufgabe hat, das Nachrichtensignal zu den sich in ihrem Funkbereich, der sogenannten Zelle, aufhaltenden mobilen Teilnehmern auszusenden, oder sie kann eine Richtfunkstation sein, die dazu dient, das Nachrichtensignal an eine andere, weit entfernte Richtfunkstation auszusenden.

Als zur Funkstation 2 gehörig ist eine Sendeantenne 3 dargestellt, die das Funksignal, dessen Trägerfrequenz im Beispiel mit f₁ bezeichnet ist, aussendet. Am Ort der Nachrichtensignal-Quelle 1 befindet sich eine Übertragungseinrichtung 10, die gemäß der Erfindung über einen Lichtwellenleiter 4 mit der entfernten Funkstation 2 verbunden ist. Die Übertragung des Nachrichtensignals von seiner Quelle 1 zur Funkstation 2 geschieht nun wie folgt:

Das Nachrichtensignal moduliert einen zur Übertragungseinrichtung 10 gehörenden optischen Sender T1, der als Lichtquelle einen Halbleiterlaser enthält, so, daß dieser eine modulierte Trägerschwingung mit einer bestimmten optischen Frequenz ν₁ an seinem Ausgang ausgibt. Ein zweiter optischer Sender T0 erzeugt eine unmodulierte optische Trägerschwingung mit einer optischen Frequenz ν₀. Die Frequenzen ν₀ und ν₁ sind dabei so gewählt, daß sie sich genau um den Betrag f₁ unterscheiden, die das von der Funkstation 2 auszusendende Funksignal haben soll. Zur Vereinfachung werden die Trägerschwingungen im folgenden "Träger" genannt.

Die zur Einhaltung der vorgegebenen Frequenzdifferenz erforderliche Frequenzsregelungs-Einrichtung ist in Fig. 1 weggelassen. Sie wird anhand von Fig. 2 erläutert. Von den Ausgängen der optischen Sender T1 und T0 werden der modulierte Träger mit der optischen Frequenz ν₁ und der unmodulierte Träger mit der optischen Frequenz ν₀ über jeweils einen Lichtwellenleiter L₁ bzw. L₀ und einen Lichtwellenleiter-Koppler 5 in den Lichtwellenleiter 4 eingekoppelt und über diesen zur entfernten Funkstation übertragen.

Dort trifft das übertragene aus den verschiedenen Lichtquellen stammende Licht auf einen optischen Empfänger 6, dessen Photodiode 7 separat dargestellt ist. Gemäß der bekannten Technik des optischen Überlagerungsempfangs entsteht durch Mischung der beiden Lichtsignale ein elektrisches Signal, das eine Komponente mit einer Frequenz enthält, die gleich der Differenz der Frequenzen der einander überlagerten Lichtsignale ist und die dem Zwischenfrequenz-Signal beim klassischen optischen Überlagerungsempfang entspricht. Dieses Signal enthält dieselbe Modulation wie das optische Ausgangssignal des optischen Senders T1 der Übertragungseinrichtung 10, was eine der bei der Technik des optischen Überlagerungsempfangs üblichen Modulationsarten sein kann. Der optische Empfänger enthält ein geeignetes selektives Element zum Selektieren der Signalkomponente mit der Frequenz f₁ aus dem durch die Mischung entstehenden Signal. Dieses Element kann entweder ein frequenzselektiver Verstärker oder ein auf f₁ abgestimmtes Filter mit nachfolgendem Verstärker sein.

Wie bei jedem System mit optischem Überlagerungsempfang ist auch bei dem vorstehend beschriebenen dafür zu sorgen, daß die Polarisationszustände der zu überlagernden Trägerwellen nicht orthogonal zueinander sind. Abgesehen von der aufwendigen Lösung der Verwendung von polarisationserhaltenden Lichtwellenleitern sind hierzu die bekannten Verfahren des Polarisations-Diversity-Empfangs oder der Polarisationsregelung anwendbar. Besonders günstig erscheint es, die Polarisation des von einem oder von beiden optischen Sendern abgegebenen Lichts zeitlich dauernd zu ändern ("Polarisationsscrambling"), so daß, statistisch gesehen, die unerwünschten relativen Polarisationszustände der Orthogonalität hinreichend unwahrscheinlich sind.

Der Lichtwellenleiter 4 kann ein Standard-Monomode-Lichtwellenleiter sein, und hinsichtlich der optischen Sender und optischen Empfänger sind keine höheren Anforderungen zu stellen als bei jeglichen Systemen, die mit optischem Überlagerungsempfang arbeiten.

Selbstverständlich können die beiden optischen Trägerschwingungen auch über verschiedene Lichtwellenleiter zum optischen Empfänger übertragen werden. Im Lichtwellenleiter 4 findet die für den optischen Empfänger beschriebene Mischung nicht statt, weil er im Gegensatz zur Photodiode 7 lineare optische Eigenschaften hat.

Ein wesentlicher Vorteil des beschriebenen Systems liegt darin, daß der optische Träger mit der Trägerfrequenz ν₁ mit einem Signal in Basisbandlage, also einem Signal mit vergleichsweise sehr geringer Bandbreite, moduliert wird. Eine solche Modulation ist mit üblichen Laserdioden leicht durchzuführen. Mit besonderem Vorteil kann, falls es erforderlich ist, an geeigneter Stelle in den Lichtwellenleiter 4 ein optischer Verstärker eingefügt werden, der völlig problemlos die beiden Trägerschwingungen verstärkt, weil er eine große Bandbreite von 3000 GHz hat.

Das nachfolgende Zahlenbeispiel soll die Wirkungsweise des erfindungsgemäßen Systems noch deutlicher erläutern:
Sieht man für das von der Funkstation auszusendende Funksignal eine Trägerfrequenz von 60 GHz vor, was einer Wellenlänge von 5 mm, einer typischen Wellenlänge aus dem Millimeterwellen-Bereich entspricht, so kann man die Trägerfrequenz ν₀ gleich 200 000 GHz und die Trägerfrequenz ν₁ gleich 200 060 GHz wählen. Die beiden Trägerschwingungen entsprechen dann Vakuum-Wellenlängen im Bereich von 1500 nm. Für Funksignale wie im gewählten Beispiel, die im Wellenlängenbereich der Milimeterwellen liegen, bestehen für kurze Funkstrecken, wie sie bei einem zellularen Mobilfunksystem mit sehr kleinen Zellen vorgesehen sind, sehr günstige und konstante Ausbreitungsbedingungen in der Atmosphäre. Solche Trägerfrequenzen können daher für ein solches System vorteilhaft verwendet werden, und für sie ist das erfindungsgemäße Übertragungssystem mit dem Überlagerungsempfang besonders geeignet, da es schwierig wäre, ein 60 GHz-Signal mittels direkter Lasermodulation über eine optische Übertragungsstrecke oder über ein anderes Übertragungsmedium zu übertragen.

Anhand von Fig. 2 wird nun die Frequenzregelung für die optischen Sender T0 und T1 der Übertragungseinrichtung 10 beschrieben. Vom optischen Sender T0 gelangt über eine Lichtwellenleiter-Verbindung LR0 Licht mit der optischen Frequenz ν₀ zu einem optischen Eingang einer Frequenzregelungs-Einrichtung 11. Vom optischen Sender T1 gelangt Licht mit der optischen Trägerfrequenz ν₁, moduliert durch das Nachrichtensignal, über eine Lichtwellenleiter-Verbindung LR1 zu einem anderen optischen Eingang der Frequenzregelungs-Einrichtung 11. Das über den Lichtwellenleiter LR0 bzw. LR1 in die Frequenzregelungs-Einrichtung 11 eingegebene Licht kann entweder das Rücklicht des im optischen Sender enthaltenen Lasers sein oder ein Lichtanteil, der von dem in Vorwärtsrichtung ausgesendeten Licht abgezweigt wird. Die Frequenzregelungs-Einrichtung 11 ist ein optischer Empfänger, der durch Überlagerung der beiden Lichtsignale ein optisches Signal mit der Differenzfrequenz vom Betrag f₁ = | ν₀ - ν₁| erzeugt und ein dem optischen Empfänger nachgeschaltetes Filter, das auf die Sollfrequenz f₁ abgestimmt ist, und das ein Steuersignal zu dem einen oder anderen optischen Sender oder zu beiden gibt, wenn die Frequenzdifferenz nicht mit der Sollfrequenz f₁ übereinstimmt. Die Steuersignale gelangen über Steuerleitungen S0 bzw. S1 an den jeweiligen optischen Sender und beeinflussen dessen optische Frequenz so, daß die Frequenzdifferenz auf den Sollwert geregelt wird. Die im Lichtsignal mit der Trägerfrequenz ν₁ enthaltene Modulation kann bei der Frequenzregelung durch einfache Tiefpaßfilterung des bei der Mischung entstehenden Signals unterdrückt werden. Zur Vorgabe der Sollfrequenz f₁ wird der Frequenzregelungs-Einrichtung 11 ein Steuersignal S eingegeben. Einrichtungen zur Regelung von optischen Signalen sind an sich bekannt, z.B. aus der DE-A1 39 07 851.

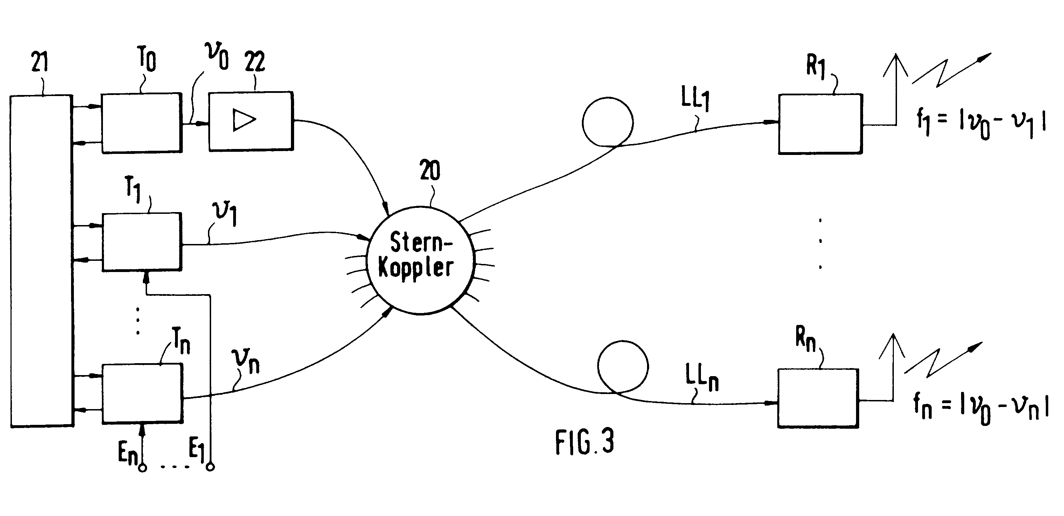

Anhand von Fig. 3 wird nun ein Übertragungssystem erläutert, mit dem eine Vielzahl von Nachrichtensignalen zu einer Vielzahl von Funkstationen übertragen wird. Da bei dem System nach Fig. 3 nicht nur ein Nachrichtensignal wie bei dem nach Fig. 1 zu übertragen ist, gibt es außer dem die optische Trägerschwingung mit der Trägerfrequenz ν₀ erzeugenden optischen Sender T₀ nicht nur einen weiteren optischen Sender T₁, der die mit dem Nachrichtensignal modulierte Trägerschwingung der Trägerfrequenz ν₁ liefert, sondern weitere optische Sender, die fortlaufend bis Tₙ numeriert sind. Von insgesamt n Nachrichtensignalen aus Quellen E₁ bis Eₙ moduliert jeweils eines einen der optischen Sender T₁ bis Tₙ, die Trägerschwingungen mit verschiedenen optischen Frequenzen ν₁ bis νₙ erzeugen. Sämtliche von den optischen Sendern erzeugten optischen Träger, der nicht modulierte Träger mit der optischen Frequenz ν₀ und die modulierten Träger mit den Frequenzen ν₁ bis νₙ, werden über jeweils einen Lichtwellenleiter zu einem Sternkoppler 20 übertragen, der über jeweils einen Lichtwellenleiter LL₁ bis LLₙ mit einer Funkstation R₁ bis Rₙ verbunden ist. Für die Funkstationen R₁ bis Rₙ sind verschiedene Trägerfrequenzen der auszusendenden Funksignale vorgesehen, die mit f₁ bis fₙ bezeichnet sind, z.B. f₁ = 60 GHz, f₂ = 61 GHz usw.

Am Ort der optischen Sender T₀ bis Tₙ befindet sich eine Frequenzregelungs-Einrichtung 21, die entsprechend der anhand von Fig. 2 beschriebenen Frequenzregelung dafür sorgt, daß jede der Trägerfrequenzen der optischen Träger sich von der Trägerfrequenz ν₀, die als Bezugsfrequenz aufzufassen ist, betragsmäßig um einen Wert unterscheidet, der gleich der Frequenz der zugeordneten Funkstation ist. Es gilt also für i = 1 bis n: fᵢ =|ν₀ - νᵢ| . Somit werden auf jedem der Lichtwellenleiter LL₁ bis LLₙ alle optischen Träger mit den Frequenzen ν₀ bis νₙ übertragen.

In jeder der Funkstationen R₁ bis Rₙ findet, wie es für die Funkstation 2 aus Fig. 1 in Bezug auf die Mischung der beiden Träger mit den Frequenzen ν₀ und ν₁ beschrieben ist, eine Mischung sämtlicher Träger statt, so daß optische Signale mit sämtlichen möglichen Differenzfrequenzen |νᵢ - νⱼ| entstehen. Da aber jeder optische Empfänger Rᵢ die Eigenschaft hat, nur das otpische Signal mit der Frequenz fᵢ = |ν₀ - νᵢ| durchzulassen und die Signale mit den anderen Frequenzen zu unterdrücken, erscheint am Ausgang jedes der optischen Empfänger das Funksignal mit der gewünschten Frequenz fᵢ, das (wie anhand von Fig. 1 beschrieben ist) mit dem von dieser Funkstation auszusendenden Nachrichtensignal moduliert ist.

Falls erforderlich, kann an geeigneter Stelle in einen der gezeigten Lichtwellenleiter ein optischer Verstärker eingefügt werden. Ein solcher Verstärker ist in dem gezeigten Beispiel zwischen den Ausgang des optischen Senders T₀ und den Sternkoppler 20 dargestellt und mit dem Bezugszeichen 22 bezeichnet.

Auch das Vielsignal-System nach Fig. 3 hat den Vorteil, daß die Funkstationen extrem einfach und billig sind, daß sämtliche Einrichtungen, die die Frequenz des jeweiligen Funksignals bestimmen, an einem einzigen Ort zentralisiert sind und daß Bauteile, die für die Übertragung verschiedener Signale nutzbar sind, insbesondere der die unmodulierte Trägerschwingung liefernde optische Sender T₀ für die Übertragung sämtlicher Signale gemeinsam genutzt werden kann.

Weiterhin ist der Vorteil gegeben, daß Änderungen im Zuge des Ausbaues oder im Zuge einer neuen Zelleneinteilung, z.B. Änderungen im Plan der Funkfrequenzen, zentral vorgenommen werden können und die Funkstationen unverändert bleiben können.

In den Funkstationen verbleiben nur noch die Funktionen, die mit dem beschriebenen Mischen der beiden Trägerschwingungen und direkt mit dem Aussenden der dadurch entstehenden Funksignale zusammenhängen. Dadurch kann auch jegliche Frequenzsteuerung, z.B. eine bei Anwendung eines Frequenzsprungverfahrens erfolgende Steuerung, durch eine zentrale Steuerung bewerkstelligt werden.

Zur Realisierung des in einer Funkstation vorhandenen optischen Empfängers, der die Eigenschaft hat, für das elektrische Signal mit der gewünschten Frequenz fᵢ = | ν₀ - νᵢ | selektiv zu sein, sind die folgenden verschiedenen Varianten möglich:

Die erste Variante ist die bereits anhand von Fig. 1 Erläuterte, bei der das empfangene Licht auf die Photodiode, z.B. Photo-pin-Diode eines optischen Empfängers trifft, dem ein auf die gewünschte Differenzfrequenz fᵢ = | ν₀ - νᵢ | abgestimmtes Filter und ein Verstärker oder ein für diese Frequenz selektiver Verstärker nachgeschaltet ist.

Eine zweite Variante sieht als optischen Empfänger einen auf die gewünschte Differenzfrequenz abgestimmten elektrischen Mikrowellenoszillator vor, der einen lichtempfindlichen GaAs-Feldeffekttransistor oder einen sogenannten HEMT (High Electron Mobility Transistor), der ebenfalls lichtempfindlich ist, aufweist. Der letztere Oszillator ist auch als HEMT-Oszillator bekannt. Auch bei einem solchen Oszillator ergibt sich eine Mischung der beiden empfangenen Träger mit der Folge, daß dem Oszillator die in dem durch Mischung entstehenden Signal mit der Komponente der Differenzfrequenz enthaltene Modulation aufgeprägt wird. Somit handelt es sich bei dem Oszillator um einen optisch injektionssynchronisierten Oszillator.

Eine dritte Variante ist ebenfalls ein optisch injektionssynchronisierter Oszillator, der auf die gewünschte Differenzfrequenz fᵢ = | ν₀ - νᵢ| abgestimmt ist. Dieser Oszillator hat als lichtempfindliches Element eine Photo-BARITT-Diode, oder eine Photo-Gunn-Diode, oder eine Photo-IMPATT-Diode. Auch dieser Oszillator synchronisiert sich auf die Differenzfrequenz fᵢ zwischen zwei empfangenen optischen Trägern und liefert daher an seinem Ausgang das mit den Nachrichtensignalen modulierte Funksignal der gewünschten Frequenz fᵢ. Er ist besonders für Frequenzen fᵢ, die im Wellenlängenbereich der Millimeterwellen entsprechen, geeignet.

Auch ein elektrischer Mikrowellenoszillator mit einem lichtempfindlichen Laufzeit-Bauelement ist geeignet.

Im folgenden wird die eingangs erwähnte zweite Erfindung beschrieben, die sich darauf bezieht, auf welche Weise ein von einer Funkstation empfangenes Funksignal, das ein Nachrichtensignal enthält, in der Funkstation und in einer davon entfernten Übertragungseinrichtung zu verarbeiten ist, damit in der entfernten Übertragungseinrichtung das Nachrichtensignal zur weiteren Verarbeitung zur Verfügung steht. Diese zweite Erfindung hat mit der ersten Erfindung, die sich auf die Erzeugung des ein Nachrichtensignal enthaltenden und von einer Funkstation auszusendenden Funksignals bezieht, die Grundidee gemeinsam, daß möglichst viele Übertragungs- und Verarbeitungseinrichtungen aus der Funkstation in die entfernte Übertragungseinrichtung verlagert werden und daß die Übertragung zwischen der Funkstation und der entfernten Übertragungseinrichtung besonders günstig für hochfrequente Funksignale im Bereich der Millimeter-Wellenlängen ist.

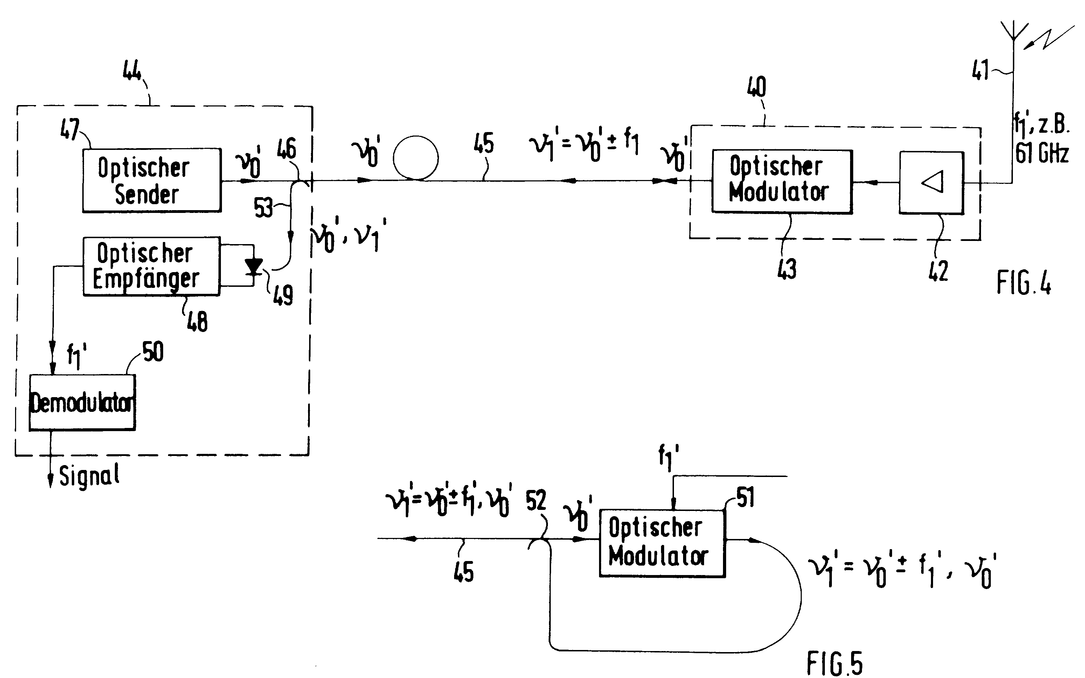

Die Fig. 4 zeigt ein Nachrichtenübertragungssystem mit einer Funk-Empfangsstation 40, deren Empfangsantenne 41 ein Funksignal empfängt, das ein Nachrichtensignal enthält, das einem Träger mit einer Trägerfrequenz im Bereich der Millimeter-Wellenlängen, z.B. 61 GHz, aufmoduliert ist. Die Trägerfrequenz dieses Funksignals ist mit f₁' bezeichnet. Die Funk-Empfangsstation 40 enthält einen Empfänger-Verstärker, der das empfangene Funksignal verstärkt und es auf den Modulationseingang eines optischen Modulators 43 gibt.

Räumlich entfernt von der Funkstation 40 hat das Nachrichtenübertragungssystem eine Übertragungseinrichtung 44. Im Gegensatz zu dem eingangs genannten bekannten Mobilfunksystem wird das von der Funk-Empfangsstation 40 empfangene Funksignal nicht in der Funkstation demoduliert, sondern wie folgt zur entfernten Übertragungseinrichtung 44 übertragen. Die Übertragungseinrichtung 44 enthält einen optischen Sender 47, der einen optischen Träger mit einer optischen Frequenz ν₀' erzeugt. Dieser optische Sender ist über einen Lichtwellenleiter 45 mit dem optischen Modulator 43 der Funk-Empfangsstation 40 verbunden, so daß der optische Träger mit der Frequenz ν₀' zum optischen Modulator übertragen wird.

Im gezeigten Beispiel ist der optische Modulator ein Reflexions-Modulator, der die Eigenschaft hat, daß er das zu ihm gesendete Licht über den Lichtwellenleiter 45 zurückreflektiert und es dabei durch das an seinem Modulationseingang anliegende Signal, hier das Funksignal mit der Trägerfrequenz f₁, moduliert. Somit gelangt über den Lichtwellenleiter 45 nicht nur der unmodulierte Träger mit der Frequenz ν₀' zurück zur Übertragungseinrichtung 44, sondern auch ein modulierter Träger mit der Frequenz ν₁'= ν₀' ± f₁'.

In der Übertragungseinrichtung 44 werden diese beiden Träger mittels eines Richtkopplers 46 aus dem Lichtwellenleiter 45 ausgekoppelt und über ein Lichtwellenleiter-Stück 53 zum optischen Eingang eines optischen Empfängers 48 übertragen. Im gezeigten Beispiel hat der optische Empfänger als lichtempfindliches Element eine Photodiode 49. Die beiden auf die Photodiode des optischen Empfängers auftreffenden optischen Träger erzeugen dort nach der bekannten Technik des optischen Überlagerungsempfangs durch Mischung ein elektrisches Signal, das eine Komponente mit einer Frequenz enthält, die gleich der Differenz der Trägerfrequenzen der einander überlagerten Träger ist und die dem Zwischenfrequenz-Signal beim klassischen optischen Überlagerungsempfang entspricht. Im vorliegenden Fall hat das Zwischenfrequenz-Signal die Trägerfrequenz f₁', d.h. es ist das Funksignal.

Das darin enthaltene Nachrichtensignal wird schließlich durch einen Demodulator 50 wiedergewonnen und steht damit für die weitere Verarbeitung oder z.B. Übertragung über eine Vermittlungsstelle bereit. Bei anderen Anwendungen als bei Mobilfunksystemen ist es auch möglich, daß der Demodulator 50 nicht in der Übertragungseinrichtung sondern anderswo vorhanden ist.

Wie oben im Zusammenhang mit dem optischen Empfänger 6 aus Fig. 1 erläutert, muß dieser die Eigenschaft haben, daß er für die gewünschte Frequenz selektiv ist. Im übrigen trifft für den optischen Empfänger das oben für den optischen Empfänger 6 aus Fig. 1 Gesagte zu, einschließlich der dazu erläuterten verschiedenen Ausführungsformen, die möglich sind.

Wie aus der vorstehenden Erläuterung ersichtlich, handelt es sich bei dem System um eines, das generell in jeglichen Anwendungsfällen einsetzbar ist, wenn das Problem besteht, ein Signal, insbesondere ein hochfrequentes Signal, von einem Ort A zu einem entfernten Ort B zu übertragen, ohne daß hierzu am Ort A aufwendige übertragungseinrichtungen vorhanden sind. Im vorliegenden Falle ist es, wenn man den Ausgang des Empfangsverstärkers 42 als Quelle des Signals ansieht, nicht mehr als ein einfacher passiver optischer Modulator, der am Ort A vorhanden sein muß. Alle weiteren zur Übertragung notwendigen Einrichtungen befinden sich am Ort B. Besonders geeignet ist das System daher für Anwendungsfälle, bei denen der Ort A schwer zugänglich ist oder dort vorhandene Einrichtungen aus verschiedenen Gründen gefährdet sind, zerstört zu werden.

Auch im Zusammenhang mit Richtfunksystemen ist das System einsetzbar, wenn es darum geht, eine Richtfunkstation möglichst einfach aufzubauen und die teueren Einrichtungen an einen entfernten Ort zu verlagern. Zur Anwendung bei zellularen Mobilfunksystemen zur Verarbeitung des in den Feststationen empfangenen Funksignals ist das System besonders geeignet, da es erlaubt, den optischen Sender für eine Vielzahl von Zellen vielfach zu verwenden, so daß insgesamt ein kostengünstiges Übertragungssystem zur Verfügung steht.

Mit besonderem Vorteil kann auf der optischen Übertragungsstrecke zwischen dem optischen Modulator 43 und der Übertragungseinrichtung 44 ein faseroptischer Verstärker eingesetzt werden, da er die Eigenschaft hat, in beiden Übertragungsrichtungen durch ihn hindurchgehendes Licht zu verstärken. Zweckmäßigerweise wird er im gezeigten Beispiel in der Nähe des optischen Modulators 43 in den Lichtwellenleiter 45 eingefügt, was in der Zeichnung zur Vereinfachung weggelassen ist.

Hinsichtlich der Polarisationszustände der einander überlagerten optischen Träger müssen bei dem System nach Fig. 4 wie bei dem nach Fig. 1 geeignete Maßnahmen getroffen werden.

Anhand von Fig. 5 wird nun ein anderer optischer Modulator 51 erläutert, der statt des in Fig. 4 gezeigten optischen Modulators 43, der ein Reflexions-Modulator ist, einsetzbar ist. Der optische Modulator 51 ist ein Modulator, der das durch ihn hindurchgehende Licht mit dem an seinem Modulationseingang anliegenden Signal moduliert. Daher kann er als optischer Transmissions-Modulator bezeichnet werden. Auch solche Modulatoren sind an sich bekannt. Es handelt sich dabei meistens um Modulatoren auf Lithiumniobat-Basis.

Tritt in diesen Modualtor 51 ein optischer Träger mit der Trägerfrequenz ν₀' ein, so entstehen durch Modulation mit einem Modulationssignal der Frequenz f₁' ein Träger mit der Trägerfrequenz ν₁ = ν₀' ± fᵢ' und der ursprüngliche Träger mit der Frequenz ν₀'. Diese werden vom Ausgang des Modulators 51 über einen Lichtwellenleiter und einen Richtkoppler 52 in den Lichtwellenleiter eingekoppelt, von dort zur entfernten Übertragungseinrichtung 44 übertragen und wie oben beschrieben verarbeitet.

Abschließend sei noch erwähnt, daß das System nach Fig. 1, bei dem das Nachrichtensignal von der Übertragungseinrichtung 10 zur Funkstation zu übertragen ist, und das System nach Fig. 4, bei dem das Nachrichtensignal von der Funkstation zur Übertragungseinrichtung 44 zu übertragen ist, zu einem bidirektionalen System kombiniert werden kann. Die Funk-Sendestation 2 aus Fig. 1 kann dann mit der Funk-Empfangsstation 40 aus Fig. 4 vorteilhaft räumlich vereinigt, wobei Einrichtungen mehrfach verwendet werden können. Entsprechendes gilt für die Übertragungseinrichtung 10 aus Fig. 1 und die Übertragungseinrichtung 44 aus Fig. 4. Schließlich kann für beide Übertragungsrichtungen ein einziger Lichtwellenleiter im Wellenlängen-Multiplex verwendet werden, indem die Frequenzen so gewählt werden, daß die Frequenzen ν₀, ν₁ (und evtl. weitere) in einem ersten Wellenlängen-Bereich, z.B. um 1500 nm, und die Frequenzen ν₀' und ν₁' in einem zweiten Wellenlängenbereich, z.B. um 1300 nm, liegen. Zum Zusammenfassen und Trennen der somit beträchtlich auseinanderliegenden optischen Träger sind dann wie üblich faseroptische Wellenlängen-Multiplexer/Demultiplexer verwendbar.

## Patentansprüche

1. Nachrichtenübertragungssystem mit einer Nachrichtensignal-Quelle (1) und einer räumlich davon entfernten Funkstation (2), bei dem eine bei der Nachrichtensignal-Quelle vorhandene und mit der Funkstation über eine Leitung (4) verbundene Übertragungseinrichtung (10) ein Nachrichtensignal zur Funkstation überträgt und die Funkstation ein das Nachrichtensignal enthaltendes Funksignal mit einer Trägerfrequenz f₁ aussendet,
**dadurch gekennzeichnet**,
- daß die Übertragungseinrichtung (10) über mindestens einen Lichtwellenleiter (4) mit der Funkstation (2) verbunden ist,
- daß die Übertragungseinrichtung (10) eine mit dem Nachrichtensignal modulierte optische Trägerschwingung mit einer ersten optischen Frequenz (ν₁) und eine unmodulierte optische Trägerschwingung mit einer zweiten optischen Frequenz (ν₀) zur Funkstation (2) überträgt, wobei die beiden optischen Frequenzen sich um den Betrag der Trägerfrequenz f₁ unterscheiden, und
- daß die Funkstation (2) eine Einrichtung (6) hat, die durch Mischung der beiden Trägerschwingungen das das Nachrichtensignal enthaltende Funksignal mit der Trägerfrequenz f₁ erzeugt.

2. System nach Anspruch 1, dadurch gekennzeichnet, daß die bei der Nachrichtensignal-Quelle (1) vorhandene Übertragungseinrichtung (10) enthält:
- einen ersten optischen Sender (T1), der mit dem Nachrichtensignal moduliert wird und eine modulierte Trägerschwingung mit der ersten optischen Frequenz (ν₁) erzeugt,
- einen zweiten optischen Sender (T0), der eine unmodulierte Trägerschwingung mit der zweiten optischen Frequenz (ν₀) erzeugt und
- eine Frequenz-Regelungseinrichtung (11), die die Differenz zwischen der ersten und zweiten optischen Frequenz auf den vorgegebenen Wert f₁ stabilisiert.

3. System nach Anspruch 1 oder 2, dadurch gekennzeichnet, daß die Einrichtung (6) der Funkstation (2) aus einem optischen Empfänger (6) mit einer Photodiode (7) und einem für die Trägerfrequenz f₁ selektiven Filter oder einem selektiven Verstärker besteht.

4. System nach Anspruch 1 oder 2, dadurch gekennzeichnet, daß die Einrichtung (6) der Funkstation (2) aus einem auf die Trägerfrequenz f₁ abgestimmten Oszillator mit einem lichtempfindlichen Feldeffekttransistor oder einem lichtempfindlichen Transistor mit hoher Elektronenbeweglichkeit oder einem lichtempfindlichen Laufzeit-Bauelement besteht.

5. System nach einem der Ansprüche 1 bis 4, dadurch gekennzeichnet,
- daß zur Übertragung einer Vielzahl von Nachrichten-Signalen zu jeweils einer Funkstation (R₁ bis Rₙ) eine bei den Quellen (E₁ bis Eₙ) vorhandene Übertragungseinrichtung (T₀ bis Tₙ, 21) eine Vielzahl von mit jeweils einem Nachrichtensignal modulierten optischen Trägerschwingungen mit verschiedenen optischen Frequenzen (ν₁ bis νₙ) und eine unmodulierte optische Trägerschwingung mit einer Bezugsfrequenz (ν₀) erzeugt, wobei jede der optischen Frequenzen (ν₁ bis νₙ) sich von der Bezugsfrequenz (ν₀) um den Betrag der für eine der Funkstationen vorgegebenen Trägerfrequenzen (f₁ bis fₙ) unterscheidet,
- daß ein Sternkoppler (20) und eine Vielzahl von Lichtwellenleitern (LL₁ bis LLₙ) vorhanden sind, die die Gesamtheit der optischen Trägerschwingungen zu der Vielzahl von Funkstationen (R₁ bis Rₙ) verteilen, und
- daß jede der Funkstationen (R₁ bis Rₙ) durch Mischen der empfangenen Trägerschwingungen und selektives Filtern das Funksignal mit der ihr zugeordneten Trägerfrequenz erzeugt.

6. Verwendung eines Nachrichtenübertragungssystems nach einem der Ansprüche 1 bis 5, um aus einem an einem ersten Ort vorhandenen Nachrichtensignal an einem zweiten Ort ein Signal, insbesondere ein hochfrequentes Signal, zu erzeugen, das das Nachrichtensignal enthält.

7. Nachrichtenübertragungssystem mit einer Funk-Empfangsstation (40), die ein ein Nachrichtensignal enthaltendes Funksignal empfängt,
**dadurch gekennzeichnet,**
- daß die Funk-Empfangsstation über mindestens einen Lichtwellenleiter (45) mit einer räumlich von ihr entfernten übertragungseinrichtung (44) verbunden ist,
- daß die übertragungseinrichtung (44) einen optischen Sender (47) enthält, der eine unmodulierte optische Trägerschwingung zur Funkstation sendet,
- daß die Funkstation einen optischen Modulator (43, 51) enthält, der die von der übertragungseinrichtung (44) gesendete optische Trägerschwingung mit dem empfangenen Funksignal (f₁') moduliert und das durch die Modulation entstehende optische Signal zurück zur übertragungseinrichtung (44) sendet,
- daß die übertragungseinrichtung (44) einen optischen Empfänger (48) enthält, der durch Mischung der unmodulierten Trägerschwingung mit der modulierten Trägerschwingung das Funksignal (f₁') gewinnt.

8. System nach Anspruch 7, dadurch gekennzeichnet, daß die Übertragungseinrichtung (44) einen Demodulator (50) hat, der durch Demodulation des im optischen Empfänger (48) gewonnenen Funksignals das darin entaltene Nachrichtensignal gewinnt.

9. Verwendung eines Nachrichtenübertragungssystems nach Anspruch 7, um ein an einem ersten Ort vorhandenes Signal, insbesondere ein hochfrequentes Signal, zu einem zweiten Ort zu übertragen.

10. System nach einem der Ansprüche 7 und 8, dadurch gekennzeichnet, daß der optische Modulator (43) ein Reflexions-Modulator ist.

11. System nach einem der Ansprüche 7 und 8, dadurch gekennzeichnet, daß der optische Modulator (51) ein Transmissions-Modulator ist, und daß sein Ausgangssignal in denselben Lichtwellenleiter (45), über den er sein Eingangssignal empfängt, eingekoppelt und zur entfernten Übertragungseinrichtung (44) übertragen wird.

## Claims

1. Communications system having an information signal source (1), and a radio station (2) that is spatially separated therefrom, in which a transmission facility (10) provided at the information signal source and connected to the radio station via a line (4), transmits an information signal to the radio station and the radio station sends out a radio signal containing the information signal at a carrier frequency f₁, **characterized in that**
- the transmission facility (10) is connected to the radio station (2) by at least one optical waveguide (4),
- the transmission facility (10) transmits to the radio station (2) an optical carrier wave modulated with the information signal and having a first optical frequency (ϑ₁), and an unmodulated optical carrier wave having a second optical frequency (ϑ₀), with the two optical frequencies differing by the value of the carrier frequency f₁, and
- the radio station (2) has a device (6) which, by mixing the two carrier waves, generates the radio signal containing the information signal and having the carrier frequency f₁.

2. System according to Claim 1, **characterised in that** the transmission facility (10) provided at the information signal, source (1) includes:
- a first optical transmitter (T1), which is modulated with the information signal and generates a modulated carrier wave having the first optical frequency (ϑ₁),
- a second optical transmitter (T0), which generates an unmodulated carrier wave having the second optical frequency (ϑ₀), and
- a frequency control device (11), which stabilises the difference between the first and second optical frequencies at the predetermined value f₁.

3. System according to Claim 1 or 2, **characterised in that** the device (6) in the radio station (2) consists of an optical receiver (6) with a photodiode (7) and a filter or an amplifier which is selective for the carrier frequency f₁.

4. System according to claim 1 or 2, **characterised in that** the device (6) in the radio station (2) consists of an oscillator tuned to the carrier frequency f₁, and a photosensitive field-effect transistor or a photosensitive high electron-mobility transistor or a photosensitive delay component.

5. System according to one of Claims 1 to 4, **characterised in that**
- to transmit a number of information signals to each one of the radio stations (R₁ to Rₙ), a transmission facility (T₀ to Tₙ, 21) provided at the information signal sources (E₁ to Eₙ), generates a number of optical carrier waves each modulated with one of the information signals and having different optical frequencies (ϑ₁ to ϑₙ), and generates an unmodulated optical carrier wave having a reference frequency (ϑ₀), with each of the optical frequencies (ϑ₁ to ϑₙ) differing from the reference frequency (ϑ₀) by the value of the carrier frequencies (f₁ to fₙ) specified for one of the radio stations,
- a star coupler (20) and a number of optical waveguides (LL₁ to LLₙ) are provided, which distribute all the optical carrier waves to the number of radio stations (R₁ to Rₙ), and
- each of the radio stations (R₁ to Rₙ), generates the radio signal with the carrier frequency assigned to it by mixing the received carrier waves and by selective filtering.

6. The use of a communication system according to one of Claims 1 to 5, to generate at a second location a signal containing the information signal, in particular a radio-frequency signal, from an information signal present at a first location.

7. Communication system having a radio receiving station (40), which receives a radio signal containing an information signal, **characterised in that**
- the radio receiving station is connected to a transmission facility (44), that is spatially separated therefrom, via at least one optical waveguide (45),
- the transmission facility (44) contains an optical transmitter (47), which transmits an unmodulated optical carrier wave to the radio station,
- the radio station contains an optical modulator (43, 51), which modulates the optical carrier wave transmitted by the transmission facility (44) with the received radio signal (f₁') and sends the optical signal resulting from the modulation back to the transmission facility (44), and
- the transmission facility (44) contains an optical receiver (48), which recovers the radio signal (f₁') by mixing the unmodulated carrier wave with the modulated carrier wave.

8. System according to Claim 7, **characterised in that** the transmission facility (44) has a demodulator (50), which, by demodulating the radio signal recovered in the optical receiver (48), recovers the information signal contained in said radio signal.

9. The use of a communication system according to claim 7, to transmit to a second location a signal present at a first location, in particular a radio-frequency signal.

10. System according to one of Claims 7 and 8, **characterised in that** the optical modulator (43) is a reflection modulator.

11. System according to one of Claims 7 and 8, **characterised in that** the optical modulator (51) is a transmission modulator, and that its output signal is injected in to the same optical waveguide (45) via which it receives its input signal and is transmitted to the remote transmission facility (44).

## Revendications

1. Système de transmission de signaux de données radio avec une source de signal de données radio (1) et une station radio (2) qui en est éloignée dans l'espace, dans lequel un dispositif de transmission (10), présent dans la source de signal de données radio et raccordé à la station radio par le biais d'une ligne (4), transmet un signal de données radio vers la station radio et dans lequel la station radio émet un signal radio contenant le signal de données radio et ayant une fréquence porteuse f₁,
caractérisé en ce que
- le dispositif de transmission (10) est raccordé à la station radio (2) par le biais d'au moins un guide d'ondes optique (4),
- le dispositif de transmission (10) transmet à la station radio (2) une oscillation porteuse optique modulée avec le signal de données radio et ayant une première fréquence optique (ν₁) et une oscillation porteuse optique non modulée ayant une deuxième fréquence optique (ν₀), à l'occasion de quoi les deux fréquences optiques ont entre elles une différence égale à la valeur de la fréquence porteuse f₁, et
- la station radio (2) a un dispositif (6) qui produit, par mélange des deux oscillations porteuses, le signal radio contenant le signal de données radio et ayant la fréquence porteuse f₁.

2. Système selon la revendication 1, caractérisé en ce que le dispositif de transmission (10) présent dans la source de signal de données radio (1) contient :
- un premier émetteur optique (T1) qui est modulé avec le signal de données radio et qui produit une oscillation porteuse modulée ayant la première fréquence optique (ν₁),
- un deuxième émetteur optique (T0) qui produit une oscillation porteuse non modulée ayant la deuxième fréquence optique (ν₀) et
- un dispositif de régulation de fréquence (11) qui stabilise à la valeur prédéfinie f₁ la différence entre la première fréquence optique et la deuxième fréquence optique.

3. Système selon la revendication 1 ou 2, caractérisé en ce que le dispositif (6) de la station radio (2) se compose d'un récepteur optique (6) ayant une photodiode (7) et d'un filtre sélectif pour la fréquence porteuse f₁ ou d'un amplificateur sélectif.

4. Système selon la revendication 1 ou 2, caractérisé en ce que le dispositif (6) de la station radio (2) se compose d'un oscillateur accordé à la fréquence porteuse f₁ ayant un transistor à effet de champ photosensible ou un transistor photosensible à grande mobilité électronique ou un composant à temps de transit photosensible.

5. Système selon une des revendications 1 à 4, caractérisé en ce que
- pour la transmission d'un grand nombre de signaux de données radio vers à chaque fois une station radio (R₁ à Rₙ), un dispositif de transmission (T₀ à Tₙ, 21) présent au niveau des sources (E₁ à Eₙ) produit un grand nombre d'oscillations porteuses modulées avec à chaque fois un signal de données radio et ayant différentes fréquences optiques (ν₁ à νₙ) et une oscillation porteuse optique non modulée ayant une fréquence de référence (ν₀), à l'occasion de quoi chacune des fréquences optiques (ν₁ à νₙ) diffère de la fréquence de référence (ν₀) d'un montant correspondant aux fréquences porteuses (f₁ à fₙ) prédéfinies pour une des stations radio,
- un coupleur en étoile (20) et un grand nombre de guides d'ondes optiques (LL₁ à LLₙ) sont présents qui distribuent la totalité des oscillations porteuses optiques au grand nombre de stations radio (R₁ à Rₙ) et
- chacune des stations radio (R₁ à Rₙ) produit, par mélange des oscillations porteuses reçues et par filtrage sélectif, le signal radio ayant la fréquence porteuse qui lui est affectée.

6. Utilisation d'un système de transmission de signaux de données radio selon l'une des revendications 1 à 5, pour produire dans un deuxième lieu, à partir d'un signal de données radio présent dans un premier lieu, un signal, en particulier un signal à haute fréquence qui contient le signal de données radio.

7. Système de transmission de signaux de données radio avec une station de réception radio (40) qui reçoit un signal radio contenant le signal de données radio, caractérisé en ce que
- la station de réception radio est, par le biais d'au moins un guide d'ondes optique (45), raccordée à un dispositif de transmission (44) qui en est éloigné dans l'espace,
- le dispositif de transmission (44) contient un émetteur optique (47) qui envoie à la station radio une oscillation porteuse optique non modulée,
- la station radio contient un modulateur optique (43, 51) qui module, avec le signal radio reçu (f₁'), l'oscillation porteuse optique envoyée par le dispositif de transmission (44) et qui renvoie au dispositif de transmission (44) le signal optique résultant de la modulation,
- le dispositif de transmission (44) contient un récepteur optique (48) qui acquiert le signal radio (f₁') par mélange de l'oscillation porteuse non modulée avec l'oscillation porteuse modulée.

8. Système selon la revendication 7, caractérisé en ce que le dispositif de transmission (44) a un démodulateur (50) qui, par démodulation du signal radio acquis dans le récepteur optique (48), acquiert le signal de données radio qui y est contenu.

9. Utilisation d'un système de transmission de signaux de données radio selon la revendication 7 pour transmettre en un deuxième lieu un signal présent dans un premier liou, en particulier un signal à haute fréquence.

10. Système selon l'une des revendications 7 et 8, caractérisé en ce que le modulateur optique (43) est un modulateur à réflexion.

11. Système selon l'une des revendications 7 et 8, caractérisé en ce que le modulateur optique (51) est un modulateur à transmission et en ce que son signal de sortie est couplé dans le même guide d'ondes optique (45) par le biais duquel il reçoit son signal d'entrée et est transmis vers le dispositif de transmission (44) éloigné.
